(19) Europäisches Patentamt
European Patent Office
Office européen des brevets

(11) **EP 3 503 252 A1**

(12) **EUROPEAN PATENT APPLICATION**

(43) Date of publication:
26.06.2019 Bulletin 2019/26

(21) Application number: 17209965.7

(22) Date of filing: 22.12.2017

(51) Int Cl.:
H01M 2/16 (2006.01)    H01M 4/131 (2010.01)
H01M 4/48 (2010.01)    H01M 4/525 (2010.01)
H01M 10/052 (2010.01)    C01G 53/00 (2006.01)
H01M 4/36 (2006.01)    H01M 4/04 (2006.01)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD TN

(71) Applicants:
• Umicore
1000 Brussels (BE)
• Umicore Korea Ltd.
Cheonan 330-200 (KR)

(72) Inventors:
• KIM, Jeong-Rae
2250 Olen (BE)
• KIM, Gyeong-Ok
2250 Olen (BE)

(74) Representative: Umicore RDI Patent Department
Watertorenstraat 33
2250 Olen (BE)

(54) **A LITHIUM COBALT OXIDE SECONDARY BATTERY COMPRISING A HIGH POROUS SEPARATOR AND POSITIVE ELECTRODE MATERIAL FOR HIGH VOLTAGE APPLICATIONS**

(57) A liquid electrolyte lithium secondary battery cell having an operating voltage superior or equal to 4.4 v and inferior or equal to 4.5V, comprising a positive electrode including a powderous positive active material represented by the following chemical formula: $Li_{1-x}(Co_{1-a-b-c}Ni_aMn_bM''_c)_{1+x}O_2$ with $-0.005 \leq x \leq 0.005$, $0.02 \leq a \leq 0.09$, $0.01 \leq b \leq 0.05$, and $0.002 \leq c \leq 0.02$, wherein M'' is either one or more metals of the group consisting of Al, Mg, Ti and Zr; and a separator sheet having a porosity of at least 50% and inferior or equal to 60%, preferably of at least 55% and inferior or equal to 60%.

Figure 1

EP 3 503 252 A1

**Description**

**TECHNICAL FIELD AND BACKGROUND**

This invention relates to a liquid electrolyte lithium cobalt oxide ($LiCoO_2$ or LCO) secondary battery cell for portable electronic devices (for instance: the mobile phones, the laptop computers, and the cameras) with improved electrochemical performances at high operating voltages (compared to conventional operating voltages).

In the framework of the present invention, a high operating voltage can be defined by a range of at least 4.4V to not more than 4.5V whereas a conventional operating voltage is inferior to 4.4V.

The current increasing demand for smaller and lighter batteries; which are suitable for portable electronic devices and which show tremendous energy densities; led to intensive developments attempting to achieve batteries with higher capacities and which are able to operate at high operation voltages.

It is a matter of fact that the capacity of a battery for portable electronic devices has now reached a plateau.

Moreover, the operating voltage of commercial batteries suitable for portable electronic devices currently varies from 4.2V to 4.35V. For very high-end portable electronic devices such as leading-edge mobile phones, batteries applying operating voltages varying from 4.4V to 4.5V are requested.

Presently, there is therefore a need to achieve batteries having excellent capacities and good cycle life at high operation voltages.

However, exploring operation voltage spaces above 4.4V is currently challenging for LCO-based batteries due to two main critical issues which are:

i) Firstly, the degradation of LCO-based positive electrode material occurs at an operating voltage above 4.4V. Indeed, during the charge of a LCO-based secondary battery, lithium ions (Li) moves from a positive electrode to an anode electrode, the state of charge increases - which induces a voltage increase - and less Li remains in the layered $Li_{1-x}CoO_2$ structure of the LCO material. The layered structure finally collapses and cobalt (Co) dissolves in the electrolyte. This phenomena is also called "Co dissolution" or "metal dissolution". The dissolution of Co is critical on the electrochemical property because it is directly linked to loss of a fraction of the active positive electrode material; and

ii) Secondly, the electrolyte may decompose at operating voltages superior to 4.4V, resulting in undesirable by-products which deteriorate the electrochemical properties of the battery and therefore its stability. Particularly, the decomposition of the electrolyte is induced by its oxidation which generates gases. The gases generation induces a swelling of the battery (also called "bulging"), which is an issue because it leads to a dislocation of the battery components (anode + separator + cathode). For instance, the contact between a negative electrode and a separator sheet; or the contact between a positive electrode and a separator sheet can be broken. In an extreme case, the battery can burst, which results in a safety issue.

It is therefore an object of the present invention to provide a stable, safe, and high energy density battery which is advantageous in that the battery exhibits good cycle life (which can be for instance sufficient to high cycle life) at a higher voltage range *versus* conventional cut-off or operating voltages (i.e. at a voltage inferior to 4.4V).

This objective is achieved by providing a liquid electrolyte lithium secondary battery according to claim 1 which comprises a high porous separator and a Ni and Mn bearing doped LCO positive electrode material, which shows improved electrochemical properties in at a voltage in the range from at least 4.4V to not higher than 4.5V.

**SUMMARY OF THE INVENTION**

The present invention concerns the following embodiments:

**Embodiment 1**

In a first aspect, the present invention can provide a liquid electrolyte lithium secondary battery cell that may have an operating voltage superior or equal to 4.4V and inferior or equal to 4.5V, said liquid electrolyte lithium secondary battery cell comprising:

a positive electrode (or cathode) including a powderous positive active material (i.e. a active material in a powder form) represented by the following chemical formula: $Li_{1-x}(Co_{1-a-b-c}Ni_aMn_bM''_c)_{1+x}O_2$ with $-0.005 \leq x \leq 0.005$, $0.02 \leq a \leq 0.09$, $0.01 \leq b \leq 0.05$, and $0.002 \leq c \leq 0.02$, wherein M'' is either one or more metals of the group consisting of Al, Mg, Ti and Zr; and

a separator sheet having a porosity of at least 50% and inferior or equal to 60%, preferably of at least 55% and inferior or equal to 60%.

In this **Embodiment 1**, the positive active material preferably has a Li:M molar ratio of $1.00 \pm 0.01$, with M including the following elements: Co, Ni, Mn, and M". In the framework of the present invention, it has been established a synergy between the following three parameters: i) the nature of positive electrode material; ii) the separator; and iii) the operating voltage of the battery; resulting in an unexpected and considerable improvement of the energy density of a liquid electrolyte-based battery.

The LCO-based positive electrode material according to the invention is suitable for lithium secondary batteries of portable electronic devices. The LCO-based positive electrode material according to the invention has a hexagonal $\alpha$-$NaFeO_2$ type structure (space group of R-3m), where layers of lithium ions are located between slabs of $CoO_6$ octahedron.

About the separator according to the present invention, its role is to prevent the physical contact between a positive electrode and an anode electrode, while it allows the transport of Li ions.

The separator according to the present invention has appropriate inherent features such as: a good chemical stability, q suitable thickness, an appropriate porosity, a high mechanical strength, a suitable wettability.

In a liquid electrolyte-based battery, separators having a porosity of 60% are undesired because at such an elevated porosity, their mechanical strength can be scarified.

Moreover, if the porosity of the separator is inferior to 50%, the separator can absorb less electrolyte which results in bad electrochemical properties of the battery.

Therefore, a careful selection of the separator porosity is required.

About the operating voltage, it has been observed that an increase of the upper cut-off voltage (which is related to the positive electrode material composition) allows to reach operating voltage values that are superior or equal to 4.4 V and inferior or equal to 4.5V, leading to an enhancement of the energy density of the battery.

**Embodiment 2**

In a second embodiment, preferably according to **Embodiment 1**, the (liquid) electrolyte includes 0.1-2.5wt%, preferably 0.5-2.0wt%, optionally 1.0-2.0%wt, more preferably 2.0%wt of a 1,3-Dioxol-2-one-based additive and/or 0.1-1.0 wt%, preferably 0.5wt% of an organosilicon-based additive, based on the total weight of the (liquid) electrolyte.

**Embodiment 3**

In a second embodiment, preferably according to the **Embodiment 1 or 2**, the separator is a polyolefin-based separator.

**Embodiment 4**

In a fourth embodiment, preferably according to any the **Embodiments 1 to 3**, the powderous positive active material comprises a core material and a surface layer. The core material comprises at least the elements Li, Co, and oxygen. The core material may also comprises (an) additional element(s) which can be Al or either one or more metals of the group consisting of Al, Ga and B. The core material has preferably a layered crystal structure (hexagonal $\alpha$-$NaFeO_2$ type structure or R-3m structure).

The surface may comprise either one or more elements of the group consisting of Li, Mn, Ni, Co, Al, O, Mg, Zr, and Ti. The surface can have a layered crystal structure and optionally be a mixture of elements of the core material and one or more elements of the group consisting of Li, Mn, Ni, Co, Al, O, Mg, Zr, Ti. In particular, the surface layer may consist of a mixture of the elements of the core material and inorganic N-based oxides, wherein N is either one or more metals of the group consisting of Li, Mn, Ni, Co, Al, O, Mg, Zr, Ti.

Preferably, the core material comprises a plurality of grains (or crystal domain or crystallites or primary particles) which are delimited one to another by grain boundaries or at least one grain boundary (a grain boundary being an interface between two grains or crystallites of the core material). Therefore, the core may comprise secondary particles including these primary particles.

An illustrative and non-limitative embodiment of the distributions of elements other than Co, Li and oxygen (such as Ni, Mn, Al, and Mg) in the positive powderous material are described below:

1) Ni and Mn are enriched in the surface layer, meaning that:

i) The concentration of Ni in the core material of the powderous positive active material is very small, since for instance the maximum doping level in the core material of the particles is about 0.2 mol% (Ni:Co molar ratio of 0.002); and

ii) The Mn concentration in the surface layer of the powderous positive active material is higher than, preferably at least twice of, the overall Mn concentration.

Optionally, the grain boundaries between the crystal domains (primary particles or grains or crystallites) in the core material have a higher Mn (and/or Ni) concentration than overall Mn (and/or Ni) concentration.

The overall Mn (and/or Ni) concentration is measured for the entire powderous active material: core material + surface layer, or core material + surface layer and/or grain boundaries.

2) Most of Mg is in the surface layer, and optionally in the grain boundaries, since the maximum doping level in the core material is for instance of about 0.2 mol% (Mg:Co molar ratio of 0.002).

3) Al is homogenously distributed in the entire powderous active material (core material + surface layer + grain boundaries, or core material + surface layer and/or grain boundaries).

In the above described distribution, at least one element such as Ni, Mn, Al and Mg is preferably present in the grain boundaries. According to the present invention, when an element is included in a grain boundary, this element is present at a surface of at least one of the primary particles of the secondary particles included in the core material.

The above described distribution of elements other than Co, Li and oxygen maybe achieved by applying a manufacturing process which is a two-step firing method for manufacturing the active material according to the invention; said manufacturing method comprising the steps of:

- providing a first mixture of a first Co- and M'-comprising and a first Li-comprising precursor powder, the first mixture having a Li to metal molar ratio >1.01, with M1 being at least one of the elements Al, Ga, B, Mg, Ti, and Zr, preferably M' = Al and Mg;

- sintering the first mixture in an oxygen comprising atmosphere at a temperature T1 of at least 900°C, thereby obtaining a Li-enriched lithium M1-based oxide compound,

- providing a second Co- and M2-comprising precursor powder, wherein M2 comprises Mn and/or Ni elements, and

- mixing the Li-enriched lithium M1-based oxide compound and the second Co- and M2-comprising precursor powder, thereby obtaining a second mixture wherein the molar ratio of Li to metal is $1.00 \pm 0.01$, and

- sintering the second mixture in an oxygen comprising atmosphere at a temperature T2 of at least 900°C.

The surface layer and the grain boundaries compositions of the active material may therefore result from this two-step firing manufacturing process.

After the first sintering step, Al and Mg are homogenously distributed overall the entire active material.

After the second sintering step, Al does not redistribute, which means that a homogenous distribution of Al will remain.

The two-step firing may therefore result in that Al is homogenously distributed overall the entire active material (core material + surface layer; optionally core material + surface layer and/or grain boundaries).

However, Mg moves towards the surface of the active material and optionally in the grain boundaries after the second sintering, resulting at least in the formation of a Mg-based (Mg oxide-based) surface coating layer. Therefore, after the second sintering, a migration of Mg from the inner of the active material to the surface of active material (optionally, in the surface layer and/or in the grain boundaries) has taken place. It results from this migration that the Mg is included in the surface layer and/or in the grain boundaries of the core material.

The surface layer can also comprise Ni and/or Mn elements which are added before the second sintering step.

If the molar ratio (Li:M) of Li/(Co+Ni+Mn+M'') is near to 1.00 (for instance 1.00 ± 0.01) when the second sintering step is effected, with M'' being one of more of the following elements: Ti, Zr, Al, Mg; in particular with M'' being Al, all Ni remains at the surface of the particle during said second sintering. Some Mn can penetrate into the inner of the active material while most of Mn do not penetrate completely. Therefore, the surface layer of the active material is then enriched with Mn.

The two-step firing may result in that elements such as Mg and/or Ni are present in (enriched in) the surface layer of the active material (optionally, Mg and/or Ni are in the surface layer and/or in the grain boundaries), whereas Mn may be present and distributed as a gradient concentration from the surface layer to the core material.

Titanium (Ti), like Mg, is typically present in the surface layer of the active material (optionally in the core material and in the surface layer and/or in the grain boundaries).

Ti can be present in a first phase in the surface layer and/or in the grain boundaries. As an example, if Li: M is near to 1.00 during the second sintering step, it allows to achieve a preferred Li:M molar ratio of $\pm$ 1.00 within said first phase, leading to improved cycle life and reduced bulging properties of the active material.

Ti can be present in a second phase in the surface layer and/or in the grain boundaries. As an example, if Li:M is > 1.00, preferably if Li:M is > 1.01 during the second sintering step, Ti traps additional lithium and forms $Li_2TiO_3$ partly constituting said second phase.

A dopant having a similar behavior than Ti and Mg is Zirconium (Zr).

Zr, like Mg and/or Ti, is typically present in the surface layer of the active material (optionally in the core material and in the surface layer and/or in the grain boundaries).

Similarly to Ti, Zr improves the rate performance and allows to achieve a preferred Li:M stoichiometry within a first phase in the surface layer and/or in the grain boundaries.

Zr can be present in a second phase in the surface layer and/or in the grain boundaries. As an example, if Li:M is superior to 1.00 (preferably superior to 1.01) during the manufacturing process, Zr traps additional lithium during the second sintering step and forms $Li_2ZrO_3$ and/or $Li_4ZrO_4$ partly constituting said second phase.

Optionally, Zr can form, during the manufacturing process, a third phase on the surface of the first and/or second phases in the layer surface by reaction with other dopants like Mg. As an example, Li-Zr-Mg-oxide phases can be obtained.

**Embodiment 5**

In a fifth embodiment, preferably according to any the **Embodiments 1 to 4**, the powderous positive active material is represented by the following chemical formula: $Li_{1-x}(Co_{0.937}Ni_{0.028}Mn_{0.015}Al_{0.01}Mg_{0.01})_{1+x}O_2$, with $-0.005 \leq x \leq 0.005$.

**Embodiment 6**

The present invention can also cover a device, preferably and electric device, comprising the liquid electrolyte lithium secondary battery cell according to the invention, preferably according to any of the preceding **Embodiments 1 to 5.**

**BRIEF DESCRIPTION OF THE FIGURES**

Figure 1: Relative cobalt dissolution (%) after floating tests, wherein x axis is the battery ID (positive electrode material ID, separator ID)

Figure 2: The thickness increase (%) after bulging tests, wherein x axis is the battery ID (positive electrode material ID, separator ID)

Figure 3: Relative discharge capacity during cycle life tests at 25°C, wherein variables are positive electrode materials and the porosity of separators

Figure 4: Relative discharge capacity during cycle life tests at 45°C, wherein variables are positive electrode materials and the porosity of separators

Figure 5: Relative discharge capacity during cycle life tests at 45°C, wherein variables are the additives in the electrolytes

**DETAILED DESCRIPTION**

In the drawings and the following detailed description, preferred embodiments are described in detail to enable practice of the invention. Although the invention is described with reference to these specific preferred embodiments, it will be understood that the invention is not limited to these preferred embodiments. But to the contrary, the invention includes numerous alternatives, modifications and equivalents as will become apparent from consideration of the following detailed description and accompanying drawings.

In the framework of the present invention, the a Ni and Mn bearing doped LCO is characterized by the formula $Li_{1-x}(Ci_{1-a-b-c}Ni_aMn_bM''_c)_{1+x}O_2$ with $-0.005 \leq x \leq 0.005$, $0.02 \leq a \leq 0.09$, $0.01 \leq b \leq 0.05$, and $0.002 \leq c \leq 0.02$, wherein M'' is either one or more metals of the group consisting of Al, Mg, Ti and Zr, whereas the high porous separator sheet in the invention is defined as a separator sheet having a porosity of at least 50% and at most 60%, preferably of at least 55% and at most 60%. The high porous separator comprises at least one kind of polyolefin based monolayer or multilayer. In a different embodiment, the high porous separator comprises a coating layer such as polymers or ceramics on one or both side to improve the properties of a separator such as wettability, electrolyte uptake, ion conductivity and interfacial resistance.

In a preferred embodiment, the Ni and Mn bearing doped LCO has particles having Mn and Ni enriched islands on their surface, said islands comprising at least 5 mol% of Mn. Therefore, the molar contents of Ni and Mn on the surface of the Ni and Mn bearing doped LCO are higher than those on the core.

The combination of the Ni and Mn bearing doped LCO with a high porous separator in a high voltage liquid electrolyte battery brings a surprising synergetic effect. The cycle life of a high voltage battery using the Ni and Mn bearing doped LCO is significantly improved if a high porous separator is used in the battery at 25°C as well as 45°C. Therefore, the lithium secondary battery in the invention has a good bulging property and less metal dissolution at a high voltage like 4.45V.

In a most preferred embodiment, the liquid electrolyte battery according to the invention comprises a suitable OS3 (organosilicon-based additive from Silatronix) as an electrolyte additive. In particular, a suitable OS3 additive used in the present invention is an organosilicon compound as described in pages 20 to 28 and/or in any of claims 1 to 3 of the US patent US9799918B. Preferably, the electrolyte in the battery according to the present invention is the electrolyte composition of any of the claims 1 to 8 of the US patent US9799918B.

The presence of at least one of these additives allows further stabilization of dissolved transition metals in electrolyte, which therefore results in an improvement of cycle life performances of the liquid electrolyte battery.

The invention is further illustrated in the following examples:

## Description of full cell preparations

1600mAh pouch-type batteries are prepared as follows: the positive electrode material powder, Super-P (Super-P Li commercially available from Timcal), and graphite (KS-6 commercially available from Timcal) as positive electrode conductive agents and polyvinylidene fluoride (PVdF 1700 commercially available from Kureha) as a positive electrode binder are added to NMP (N-methyl-2-pyrrolidone) as a dispersion medium. The mass ratio of the positive electrode material powder, conductive agent, and binder is set at 96/1/1/2. Thereafter, the mixture is kneaded to prepare a positive electrode mixture slurry. The resulting positive electrode mixture slurry is then applied onto both sides of a positive electrode current collector, made of a 12$\mu$m thick aluminum foil. The width of the applied area is 50mm. The positive electrode active material loading weight is around 14 mg/cm$^2$. The electrode is then dried and calendared using a pressure of 120Kgf. The typical electrode density is 3.9g/cm$^3$. In addition, an aluminum plate serving as a positive electrode current collector tab is arc-welded to an end portion of the positive electrode.

Commercially available negative electrodes are used. In short, a mixture of graphite, CMC (carboxy-methyl-cellulose-sodium) and SBR (styrenebutadiene-rubber), in a mass ratio of 96/2/2, is applied on both sides of a copper foil. A nickel plate serving as a negative electrode current collector tab is arc-welded to an end portion of the negative electrode.

Non-aqueous electrolyte is obtained by dissolving lithium hexafluorophosphate (LiPF6) salt at a concentration of 1.0 mol/L in a mixed solvent of EC (ethylene carbonate) and DEC (diethyl carbonate) in a volume ratio of 1:2 with additives.

A sheet of the positive electrode, a sheet of the negative electrode, and a sheet of separator interposed between them are spirally wound using a winding core rod in order to obtain a spirally-wound electrode assembly. The wounded electrode assembly and the electrolyte are then put in an aluminum laminated pouch in an air-dry room with dew point of -50°C, so that a flat pouch-type lithium secondary battery is prepared. The design capacity of the secondary battery is 1600mAh when charged to 4.35V.

The non-aqueous electrolyte solution is impregnated for 8 hours at room temperature. The battery is pre-charged at 15% of its theoretical capacity and aged 1 day at room temperature. The battery is then degassed and the aluminum pouch is sealed. The battery is prepared for use as follows: the battery is charged using a current of 0.25C (with 1C=1600mAh/g) in CC mode (constant current) up to the target voltage then CV mode (constant voltage) until a cut-off current of C/20 is reached. Then, the battery is discharged in CC mode at 0.5C rate down to a cut-off voltage of 3.0V.

## Description of testing methods

A) Cycle life test

1600mAh pouch-type batteries prepared by above preparation method are charged and discharged several times under the following conditions, both at 25°C and 45°C, to determine their charge-discharge cycle performance:

- Charging is performed in CC mode under 1C rate up to 4.45V, then CV mode until C/20 is reached,
- The cell is then set to rest for 10 minutes,
- Discharge is done in CC mode at 1C rate down to 3.0V,
- The cell is then set to rest for 10 minutes,
- The charge-discharge cycles proceed until the battery reaches 80% retained capacity. Every 50 cycles, the discharge is done at 0.2C rate in CC mode down to 3.0V.

The retained capacity at the different cycles are calculated as the ratio of the discharge capacity obtained at the cycle number to cycle 2.

B) Bulging test

1600mAh pouch-type batteries prepared by above preparation method are fully charged until 4.45V and inserted in an oven which is heated to 90°C, then stays for 4 hours. At 90°C, the charged cathode reacts with electrolyte and creates gas. The evolved gas creates a bulging. The increase of thickness ((thickness after storage-thickness before storage)/thickness before storage) is measured after 4 hours.

C) Floating test (metal dissolution test)

1600mAh pouch-type batteries prepared by above preparation method are firstly charged to 4.45V at CCCV mode and C/20 rate (with 1C=1600mAh/g), then is kept at constant the upper voltage for 7 days at high temperature (50°C). After the floating test, the battery is disassembled. The anode is analyzed by ICP (inductively coupled plasma) for a metal (cobalt) dissolution analysis.

Example 1

A Ni and Mn bearing doped LCO EX1 is prepared according to below described process.
A cobalt precursor such as $Co_3O_4$, of which the average particle size (measured using a Malvern Mastersizer 3000 with Hydro MV wet dispersion accessory after dispersing the powder in an aqueous medium) is around $2.8\mu m$, is mixed with a lithium precursor such as $Li_2CO_3$, MgO and $Al_2O_3$ as dopants by a typical industrial blender to prepare "Blend-1", wherein the molar ratio between Li and Co (Li/Co) is 1.05 to 1.10, Mg/Co is 0.01, and Al/Co is 0.01. The Blend-1 in ceramic trays is fired at 900°C to 1100°C for 5 to 15 hours in a kiln. The first sintered powder is de-agglomerated and screened by a milling equipment and sieving tool to prepare a doped intermediate LCO named "LCO-1". The Li/Co of LCO-1 from ICP analysis is 1.068. The LCO-1 is mixed with a mixed metal hydroxide ($M'(OH)_2$, $M'=Ni_{0.55}Mn_{0.30}Co_{0.15}$) of which the average particle size (measured using a Malvern Mastersizer 3000 with Hydro MV wet dispersion accessory after dispersing the powder in an aqueous medium) is around $3\mu m$ by a typical industrial blender to prepare "Blend-2", wherein the amount of $M'(OH)_2$ is 5mol% compared to the cobalt in LCO-1 ($M'/Co_{Lco-1}=0.05$). $M'(OH)_2$ is prepared by typical co-precipitation technology. The Blend-2 in ceramic trays is fired at 900°C to 1100°C for 5 to 15 hours in a kiln. The second sintered powder is de-agglomerated and screened by a milling equipment and sieving tool to prepare a final Ni and Mn bearing doped LCO named "EX1"

$$(Li_{1-x}(Co_{0.937}Ni_{0.028}Mn_{0.015}Al_{0.01}Mg_{0.01})_{1+x}O_2, \; -0.005 \leq x \leq 0 \; or \; 0 \leq x \leq 0.005).$$

Comparative Example 1

A doped LCO CEX1 is prepared according to below described process.
A cobalt precursor such as $Co_3O_4$, of which the average particle size (measured using a Malvern Mastersizer 3000 with Hydro MV wet dispersion accessory after dispersing the powder in an aqueous medium) is around $2.8\mu m$, is mixed with a lithium precursor such as $Li_2CO_3$, MgO and $TiO_2$ as dopants by a typical industrial blender to prepare "Blend-C1", wherein the molar ratio between Li and Co (Li/Co) is 1.04 to 1.10, Mg/Co is 0.0025, and Ti/Co is 0.0008. The Blend-C1 in ceramic trays is fired at 900°C to 1100°C for 5 to 15 hours in a kiln. The first sintered powder is de-agglomerated and screened by a milling equipment and sieving tool to prepare a doped intermediate LCO named "LCO-C1". The Li/Co of LCO-C1 from ICP analysis is 1.054. The LCO-C1 is mixed with $Li_2CO_3$, $Co_3O_4$, MgO, $TiO_2$, and $Al_2O_3$ by a typical industrial blend to prepare "Blend-C2", where in 13mol% Co are added compared to the cobalt in LCO-C1, the target Li/Co, Mg/Co, Ti/Co, Al/Co are 0.99 to 1.01, 0.01, 0.0028, and 0.01, respectively. The Blend-C2 in ceramic trays is fired at 900 to 1100°C for 5 to 10 hours in a roller hearth kiln (RHK). The second sintered powder is de-agglomerated and screened by a milling equipment and sieving tool to prepare a final doped LCO named "CEX1"

$$(Li_{1-x}(Co_{0.9772}Al_{0.01}Mg_{0.01}Ti_{0.0028})_{1+x}O_2, -0.005 \leq x \leq 0 \text{ or } 0 \leq x \leq 0.005).$$

Example 2

1600mAh pouch-type batteries are prepared by the preparation method described in "Description of full cell preparations" with following details and named EX2:

The Ni and Mn bearing doped LCO EX1 is used as a positive electrode material. A separator sheet called "S1" is used as a separator between a positive electrode and negative electrode. S1 is a commercial polyolefin based separator which has a porosity of 58%, wherein the porosity is defined by following formula "porosity (%) = [1-((sample weight/sample volume)/polymer density)]×100". 2% of (a) suitable VC (vinylene carbonate or 1,3-Dioxol-2-one-based) additive(s) by weight, based on the total weight of electrolyte, is added in the electrolyte as an additive. The preparation conditions are described in Table 1.

EX2 batteries are tested by the testing methods described in "Description of testing methods" at different testing temperature.

Explanatory example 1

As an illustrative and non-limitative explanatory example, the porosity of the separator sheet S1 is obtained by the following method:

S1 is punched by a commercial separator punching device (from Roh-tech) of which diameter is 18mm. The average thickness of S1 measured by a micrometer (Digital micrometer series 283 from Mitutoyo) is 15$\mu$m. Therefore, the sample volume of the punched S1 is 0.003435cm$^3$. The sample weight of the punched S1 measured by a micro balance (XP6 from Mettler Toledo) is 0.001451g. The theoretical density of polyethylene is about 1.00g/cm$^3$. According to the formula "porosity (%) = [1-((sample weight/sample volume)/polymer density)]×100", the porosity of S1 is 58%.

S2 porosity has been measured with method similar to the method used for S1.

Comparative Example 2

1600mAh pouch-type batteries are prepared by the same preparation method like EX2 except that a separator sheet called "S2" is used as a separator and named CEX2. S2 is a commercial polyolefin based separator which has a porosity of 46%. The preparation conditions are described in Table 1.
CEX2 batteries are tested by the testing methods described in "Description of testing methods" at different testing temperature.

Comparative Example 3

1600mAh pouch-type batteries are prepared by same preparation method like EX2 except that the doped LCO CEX1 is used as a positive electrode material and named CEX3. The preparation conditions are described in Table 1.
CEX3 batteries are tested by the testing methods described in "Description of testing methods" at different testing temperature.

Comparative Example 4

1600mAh pouch-type batteries are prepared by same preparation method like EX2 except that the doped LCO CEX1 is used as a positive electrode material and S2 is used as a separator and named CEX4. The preparation conditions are described in Table 1.
CEX4 batteries are tested by the testing methods described in "Description of testing methods" at different testing temperature.

Example 3

1600mAh pouch-type batteries are prepared by same preparation method like EX2 except that 0.5%wt OS3 and 2%wt VC as additives in the electrolyte, based on the total weight of electrolyte. The preparation conditions are described in Table 1.

EX3 batteries are tested by the testing methods described in "Description of testing methods" at different testing temperature.

Table 1. The components of pouch-type batteries.

| Battery ID | Positive electrode material | Separator ID | Electrolyte additive | Cycles at 80% of relative capacity (25°C) | Cycles at 80% of relative capacity (45°C) |
|---|---|---|---|---|---|
| EX2 | EX1 | S1 | 2% VC | 890 | 336 |
| CEX2 | EX1 | S2 | 2% VC | 340 | 194 |
| CEX3 | CEX1 | S1 | 2% VC | 656 | 135 |
| CEX4 | CEX1 | S2 | 2% VC | 580 | 118 |
| EX3 | EX1 | S1 | 0.5% OS3, 2% VC | 1000 | 408 |

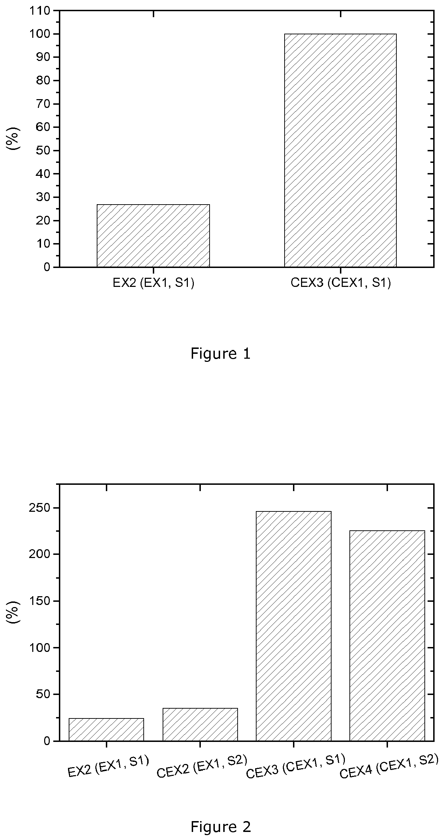

Figure 1 as an explanatory example shows the relative cobalt dissolution value from floating tests, wherein the cobalt dissolution value of CEX3 is considered as 100%. It is observed that EX2 has much less cobalt dissolution than CEX3. Since the difference between EX2 and CEX3 is only the used positive electrode materials (EX1 vs. CEX1), it is confirmed that EX1 delivers much less cobalt dissolution than CEX1 in batteries.

Figure 2, also as an explanatory example, shows the thickness increase from the bulging test. Independently with the type of separators, much less thickness increase is observed when EX1 is used as a positive electrode material compared to CEX1.

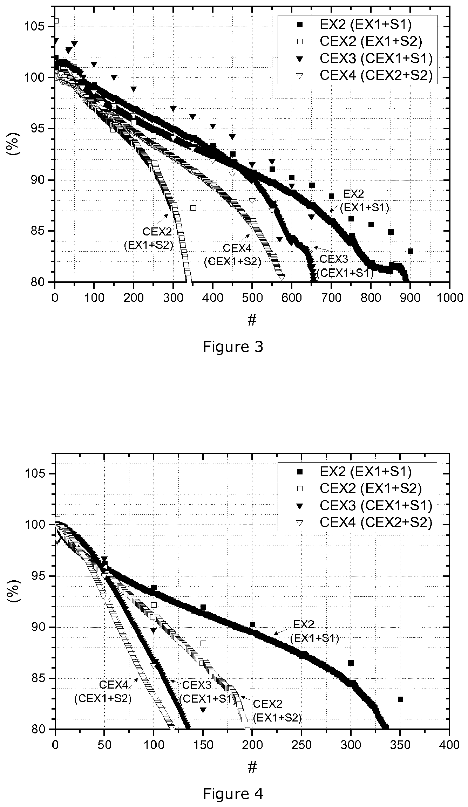

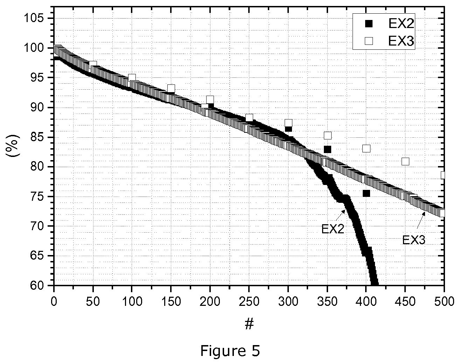

Figure 3 shows the relative capacities as a function of cycle number from the cycle life tests at 25°C. CEX2 has the worst cycle life and EX2 has the best cycle life among four different batteries. Since the difference between EX2 and CEX2 is only the used separators, it is confirmed that S1 with EX1 material delivers significantly improved cycle life. The effect of using S1 with CEX1 material is not as big as that with EX1. Figure 4 shows the relative capacities as a function of cycle number from the cycle life tests at 45°C. Again, EX2 has the best cycle life among four different batteries at 45°C due to the synergetic effect between the positive electrode material EX1 and high porous separator S1 while there is marginal effect of using CEX1 together with S2. As shown in Figure 5 and Table 1, EX3 which contain OS3 and VC as electrolyte additives, can have further improved cycle life at both 25°C and 45°C.

**Claims**

1. A liquid electrolyte lithium secondary battery cell having an operating voltage superior or equal to 4.4 V and inferior or equal to 4.5V, comprising:

   a positive electrode including a powderous positive active material represented by the following chemical formula:

   $Li_{1-x}(Co_{1-a-b-c}Ni_aMn_bM''_c)_{1+x}O_2$ with $-0.005 \leq x \leq 0.005$, $0.02 \leq a \leq 0.09$, $0.01 \leq b \leq 0.05$, and $0.002 \leq c \leq 0.02$, wherein M'' is either one or more metals of the group consisting of Al, Mg, Ti and Zr; and
   a separator sheet having a porosity of at least 50% and inferior or equal to 60%, preferably of at least 55% and inferior or equal to 60%.

2. The liquid electrolyte lithium secondary battery cell according to claim 1, comprising a liquid electrolyte including 0.1-2.0wt% of 1,3-Dioxol-2-one-based and/or 0.1-1.0 wt% organosilicon-based additives, based on the total weight of the liquid electrolyte.

3. The liquid electrolyte lithium secondary battery cell according to claim 1 or 2, wherein the separator is a polyolefin-based separator.

4. The liquid electrolyte lithium secondary battery cell according to any of claims 1 to 3, wherein the powderous positive active material is represented by the following chemical formula: $Li_{1-x}(Co_{0.937}Ni_{0.028}Mn_{0.015}Al_{0.01}Mg_{0.01})_{1+x}O_2$, with $-0.005 \leq x \leq 0.005$.

5. A device comprising the liquid electrolyte lithium secondary battery cell according to any of claims 1 to 4.

Figure 1

Figure 2

Figure 3

Figure 4

Figure 5

Europäisches
Patentamt

European
Patent Office

Office européen
des brevets

# EUROPEAN SEARCH REPORT

Application Number

EP 17 20 9965

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2016/156032 A1 (LEE DAEHOE [KR] ET AL) 2 June 2016 (2016-06-02) * paragraphs [0010] - [0031], [0059], [0060], [0074] - [0079], [0083] * * paragraphs [0105], [0114], [0115], [0120], [0132] * | 1-5 | INV. H01M2/16 H01M4/131 H01M4/48 H01M4/525 H01M10/052 C01G53/00 H01M4/36 H01M4/04 |
| A | US 2009/148772 A1 (KAWASATO TAKESHI [JP] ET AL) 11 June 2009 (2009-06-11) * paragraphs [0020], [0024], [0036] - [0039], [0044] - [0046], [0093], [0103], [0117]; examples 1-5 * | 1-5 | |
| A | JULIEN C ED - DE SOUZA ROGER ET AL: "Local structure and electrochemistry of lithium cobalt oxides and their doped compounds", SOLID STATE IO, NORTH HOLLAND PUB. COMPANY. AMSTERDAM; NL, NL, vol. 157, no. 1-4, 14 May 2002 (2002-05-14), pages 57-71, XP004411808, ISSN: 0167-2738, DOI: 10.1016/S0167-2738(02)00190-X * Section 4.1 * | 1-5 | |
| A | US 2006/071198 A1 (PAULSEN JENS M [KR] ET AL) 6 April 2006 (2006-04-06) * paragraphs [0016] - [0018], [0033], [0034], [0047]; examples 7,8 * | 1-5 | TECHNICAL FIELDS SEARCHED (IPC) H01M C01G |
| A | US 2015/357641 A1 (SUGIE TSUKASA [JP] ET AL) 10 December 2015 (2015-12-10) * paragraphs [0004] - [0008], [0028], [0031] - [0036], [0047], [0072] * * paragraphs [0100], [0102], [0136], [0173] - [0178] * | 1-5 | |

The present search report has been drawn up for all claims

| Place of search | Date of completion of the search | Examiner |
|---|---|---|
| Munich | 22 May 2018 | Mugnaini, Veronica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 17 20 9965

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2018

| Patent document cited in search report | | Publication date | Patent family member(s) | | | Publication date |
|---|---|---|---|---|---|---|
| US 2016156032 | A1 | 02-06-2016 | KR | 20160064881 | A | 08-06-2016 |
| | | | US | 2016156032 | A1 | 02-06-2016 |
| US 2009148772 | A1 | 11-06-2009 | CN | 101489936 | A | 22-07-2009 |
| | | | CN | 102263259 | A | 30-11-2011 |
| | | | JP | 5112318 | B2 | 09-01-2013 |
| | | | JP | WO2008084679 | A1 | 30-04-2010 |
| | | | KR | 20090045152 | A | 07-05-2009 |
| | | | TW | 200843164 | A | 01-11-2008 |
| | | | US | 2009148772 | A1 | 11-06-2009 |
| | | | WO | 2008084679 | A1 | 17-07-2008 |
| US 2006071198 | A1 | 06-04-2006 | CA | 2577215 | A1 | 30-03-2006 |
| | | | CN | 101006012 | A | 25-07-2007 |
| | | | EP | 1794086 | A1 | 13-06-2007 |
| | | | KR | 20060051196 | A | 19-05-2006 |
| | | | TW | I294704 | B | 11-03-2008 |
| | | | US | 2006071198 | A1 | 06-04-2006 |
| | | | WO | 2006033529 | A1 | 30-03-2006 |
| US 2015357641 | A1 | 10-12-2015 | CN | 104936902 | A | 23-09-2015 |
| | | | CN | 105870424 | A | 17-08-2016 |
| | | | CN | 105958022 | A | 21-09-2016 |
| | | | DE | 112014000567 | T5 | 22-10-2015 |
| | | | JP | 5979251 | B2 | 24-08-2016 |
| | | | JP | WO2014115559 | A1 | 26-01-2017 |
| | | | US | 2015357641 | A1 | 10-12-2015 |
| | | | WO | 2014115559 | A1 | 31-07-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9799918 B